# EUROPÄISCHE PATENTSCHRIFT

(11) **EP 4 107 445 B1**
(45) Veröffentlichungstag und Bekanntmachung des Hinweises auf die Patenterteilung: **27.03.2024**
(21) Anmeldenummer: 22743706.8
(22) Anmeldetag: 06.07.2022
(51) Int. Cl.: F24S 23/74

(54) **SONNENKOLLEKTOR**
SOLAR COLLECTOR
CAPTEUR SOLAIRE

(30) Priorität: 16.08.2021 AT 506632021
(43) Veröffentlichungstag der Anmeldung: 28.12.2022
(73) Patentinhaber: Kornmüller, Manfred, 3353 Seitenstetten (AT)
(72) Erfinder: Kornmüller, Manfred, 3353 Seitenstetten (AT)
(74) Vertreter: Hübscher & Partner Patentanwälte GmbH
(86) Internationale Anmeldenummer: PCT/AT2022/060243
(87) Internationale Veröffentlichungsnummer: WO 2022/221900

(56) Entgegenhaltungen:
- DE-A1- 3 134 690
- US-A- 4 502 200
- US-A1- 2013 229 723
- US-B2- 9 038 421

## Beschreibung

### Technisches Gebiet

Die Erfindung bezieht sich auf einen Sonnenkollektor mit einem Träger, mit nebeneinandergereihten, an beidseits des Trägers vorgesehenen Anschlussflächen befestigten Tragsegmenten aus offenen Kunststoffschalen, die eine Parabolrinne vorgebende seitliche Randflansche zur Aufnahme von Spiegelsegmenten sowie eine von der anschlussseitigen Stirnseite ausgehende, vom Schalenboden ausgewölbte Mittelrippe aufweisen, die eine der Parabolrinne folgende Spiegelstützfläche bildet.

### Stand der Technik

Zur vorteilhaften Ausnützung der Sonnenenergie sind Sonnenkollektoren in Form von Parabolrinnen mit einem Absorberrohr in der Brennpunktsachse bekannt. Um Spiegelsegmente entsprechend der parabolischen Rinnenform anzuordnen und den rinnenförmigen Sonnenkollektor um eine zur Längsachse des Rinnenprofils parallele Achse dem Sonnenstand nachführen zu können, wird üblicherweise ein Traggestell mit einem die Schwenkwelle bildenden Träger vorgesehen, an dem beidseitig abstehende, das Rinnenprofil vorgebende, in Richtung des Trägers nebeneinandergereihte Tragsegmente zur Spiegelaufnahme befestigt sind. Die dünnwandigen Spiegelsegmente müssen daher lediglich unter einer entsprechenden elastischen Verformung mit den Tragsegmenten verbunden werden. Um eine leichte Bauweise sicherstellen zu können, ohne auf eine ausreichende Stabilität und Formgenauigkeit des Sonnenkollektors verzichten zu müssen, wurde bereits vorgeschlagen (WO 2013/087477 A1), die Tragsegmente als gegen die Spiegelsegmente offene Kunststoffschalen auszubilden, die einen umlaufenden Randflansch zur Aufnahme der Spiegelsegmente bilden. Zur Sicherung der Formstabilität der Spiegelsegmente bei den zu erwartenden Windbelastungen sind die wannenförmigen Kunststoffschalen, die entsprechend dem Belastungsverlauf mit zunehmendem Abstand vom Träger eine geringere Tiefe aufweisen, mit einer zusätzlichen Mittelrippe versehen, die eine weitere Abstützung für das Spiegelsegment zwischen den Randflanschen mit sich bringt. Diese Mittelrippe ist außerdem mit einer Quernut in der Stützfläche versehen, um die Torsionssteifigkeit der Tragsegmente zu erhöhen. Trotz dieser Maßnahmen konnten jedoch höhere Anforderungen insbesondere an die Formstabilität bei einem vergleichsweise geringen Gewicht nicht erfüllt werden.

### Darstellung der Erfindung

Der Erfindung liegt somit die Aufgabe zugrunde, vorteilhafte Voraussetzungen für die Tragkonstruktion eines formstabilen Sonnenkollektors aus dünnwandigen Spiegelsegmenten zu schaffen, die entlang eines Trägers nebeneinander zu einer Parabolrinne nebeneinandergereiht werden.

Ausgehend von einem Sonnenkollektor der eingangs geschilderten Art löst die Erfindung die gestellte Aufgabe dadurch, dass die Mittelrippe vor der der anschlussseitigen Stirnseite gegenüberliegenden, auslaufseitigen Stirnseite endet, dass zwischen der Mittelrippe und den seitlichen Schalenwänden wenigstens je eine von einer durchgehenden Stirnwand der auslaufseitigen Stirnseite ausgehende und vor der anschlussseitigen Stirnseite endende, eine der Parabolrinne folgende Spiegelstützfläche bildende Seitenrippe aus dem Schalenboden ausgewölbt ist und dass die vom Schalenboden aufragenden seitlichen Schalenwände sowie die Wände der Mittelrippe abgesetzte Schultern bilden.

Die aus dem Schalenboden ausgewölbten Rippen, nämlich eine Mittelrippe und wenigstens zwei Seitenrippen, sind zwar für die Tragfähigkeit der Kunststoffschale notwendig, aber nicht hinreichend, um die für die angestrebte Formstabilität erforderliche Biege- und Torsionssteifigkeit bei den zu erwartenden hohen Belastungen insbesondere durch Windkräfte sicherstellen zu können. Diese hohen Widerstandsmomente gegen eine Verformung werden in überraschender Weise durch die zusätzlichen endseitigen Wandabschnitte der vor den jeweils gegenüberliegenden Stirnseiten der Kunststoffschalen endenden, gegenseitig auf Lücke versetzten Rippen in Verbindung mit den abgesetzten Schultern der Seitenwände der Kunststoffschale und der Wände der Mittelrippe ermöglicht, und zwar bei einer vergleichsweise kleinen, einheitlichen Wanddicke der Kunststoffschale, zumal die Seitenrippen von einer durchgehenden, die Versteifung der Kunststoffschale unterstützenden Stirnwand der auslaufseitigen Stirnseite ausgehen. Da die aus dem Schalenboden ausgewölbten Rippen nicht nur ein hohes Widerstandsmoment gegen eine das Rinnenprofil beeinträchtigende Verformung der Kunststoffschale bedingen, sondern auch zusätzliche, dem Verlauf der Parabolrinne folgende Stützflächen für die Spiegelsegmente bereitstellen, können durch die erfindungsgemäßen Tragsegmente auch dünne, elastisch an die eine Parabolrinne vorgebenden Tragsegmente angedrückt gehaltene Spiegelsegmente zum Einsatz kommen.

Besonders vorteilhafte Konstruktionsbedingungen werden erhalten, wenn sich die Mittelrippe ausgehend von der anschlussseitigen Stirnseite der Kunststoffschale und die Seitenrippen ausgehend von der auslaufseitigen Stirnwand verjüngen, um aufgrund der zueinander konvergierend verlaufenden Rippenwände insbesondere die Quersteifigkeit zu verbessern. Außerdem lassen sich von einander gegenüberliegenden Stirnseiten der Kunststoffschale ausgehende Rippen platzsparender anordnen, wenn sie sich entsprechend verjüngen.

Durch die Maßnahme, dass die abgesetzten Schultern der seitlichen Schalenwände sowie der Wände der Mittelrippe einen abgesetzten Bodenabschnitt mit einer gegen die auslaufseitige Stirnseite kontinuierlich abnehmenden Absatzhöhe bilden und dass die Seitenrippen von dem abgesetzten Bodenabschnitt aufragen, kann in einfacher Art berücksichtigt werden, dass die wannenförmigen Kunststoffschalen entsprechend dem Belastungsverlauf mit zunehmendem Abstand vom Träger eine geringere Tiefe aufweisen, sodass aufgrund der gegen die auslaufseitige Stirnseite der Kunststoffschalen auslaufenden Schultern die Seitenrippen mit einer auch im Bereich der auslaufseitigen Stirnseite der Kunststoffschale ausreichenden Höhe für ein entsprechendes Widerstandsmoment ausgebildet werden können.

Obwohl für bestimmte Anwendungsfälle mit je einer Seitenrippe auf den beiden Seiten der Mittelrippe das Auslangen gefunden wird, empfiehlt sich das Vorsehen von je zwei Seitenrippen zwischen der Mittelrippe und den seitlichen Schalenwänden, wenn hohe Windbelastungen berücksichtigt werden müssen.

Der Wirkungsgrad eines Sonnenkollektors mit einer Spiegelfläche in Form einer Parabolrinne hängt von der Einhaltung der Parabelform und deren Ausrichtung gegenüber dem Absorberrohr ab, das parallel zum Träger der Tragsegmente verläuft. Weisen die Tragsegmente auf der anschlussseitigen Stirnseite einen einen Richtanschlag des Trägers formschlüssig übergreifenden Anschlagwinkel auf, so können die die Parabelform vorgebenden Kunststoffschalen der Tragsegmente einfach und genau gegenüber dem Träger und damit gegenüber dem Absorberrohr ausgerichtet werden, weil die Tragsegmente lediglich mit ihren Anschlagwinkeln an den Anschlagwinkeln unter Anlage an den seitlichen Anschlussflächen des Trägers eingehängt werden müssen, um die erforderliche Ausrichtung sicherzustellen. Die Tragsegmente müssen dann nur mehr mit dem Träger starr verbunden werden, beispielsweise durch ein Niederhalten des Anschlagwinkels auf dem Richtanschlag und einem Verschrauben mit den Anschlussflächen des Trägers.

### Kurze Beschreibung der Erfindung

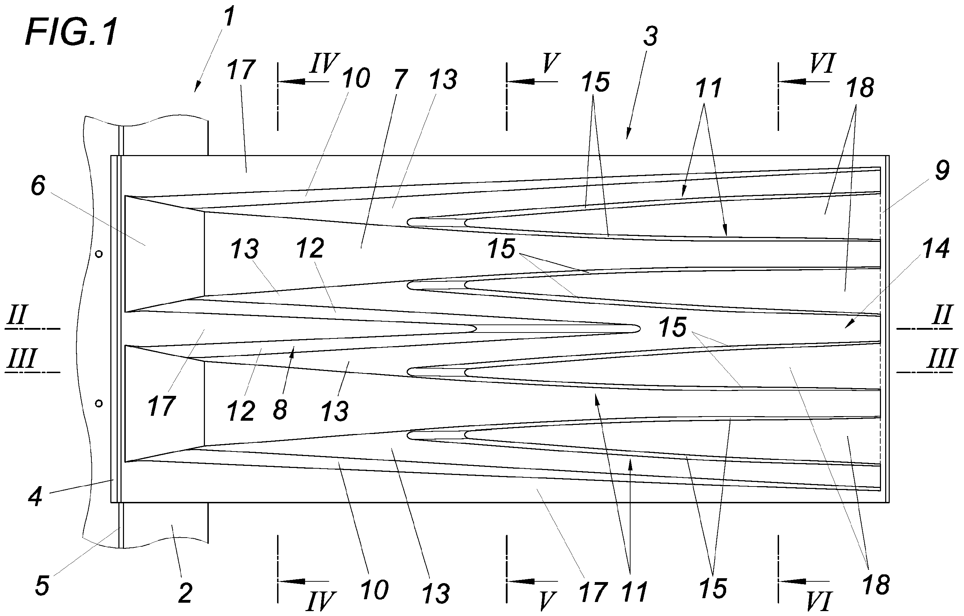

In der Zeichnung ist der Erfindungsgegenstand beispielsweise dargestellt. Es zeigen
- Fig. 1: ein auf einem Träger befestigtes erfindungsgemäßes Tragsegment in einer Draufsicht,
- Fig. 2: dieses Tragsegment in einem Schnitt nach der Linie II-II der Fig. 1 in einem größeren Maßstab,
- Fig. 3: das Tragelement in einem Schnitt nach der Linie III-III der Fig. 1 ebenfalls in einem größeren Maßstab und die

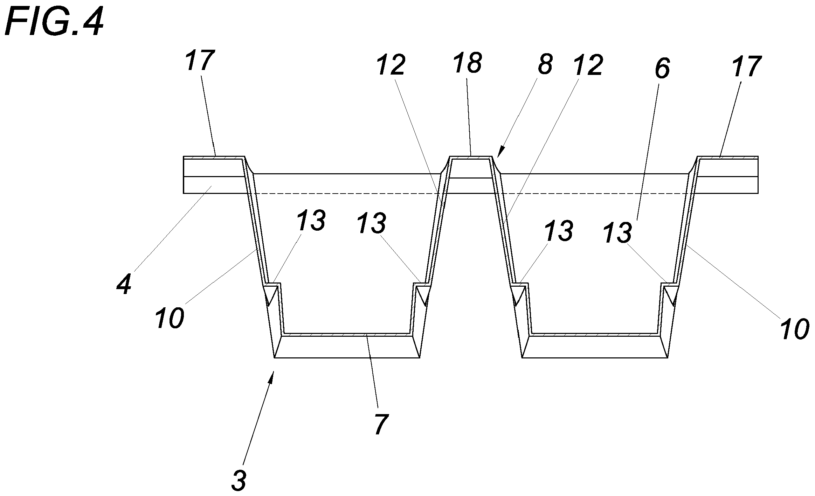

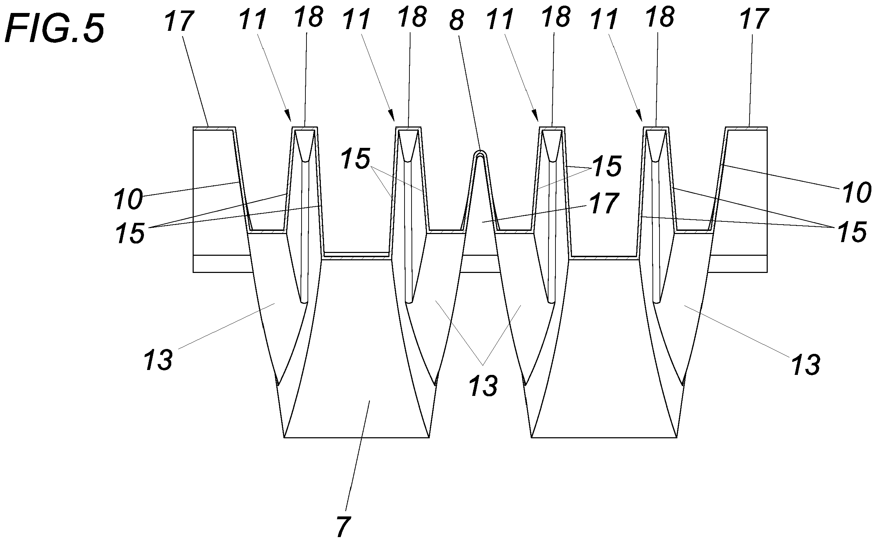

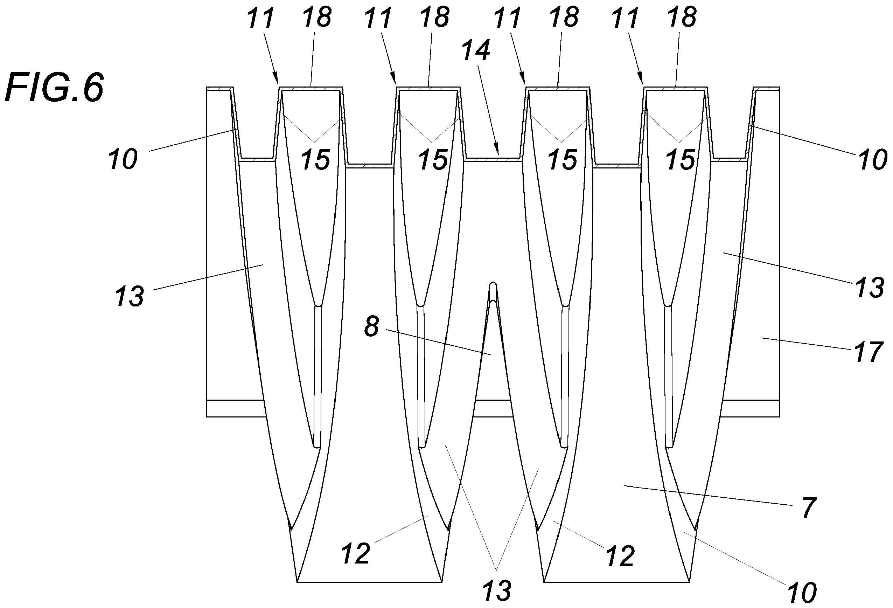

- Fig. 4 bis 6: das Tragsegment in parallelen Querschnitten nach den Linien IV-IV, V-V und VI-VI der Fig. 1 je in einem größeren Maßstab.

### Wege zur Ausführung der Erfindung

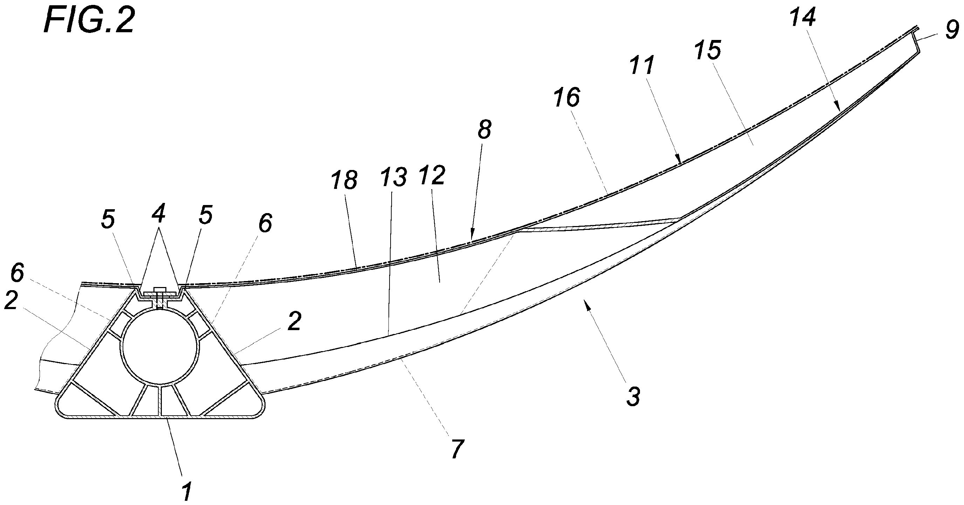

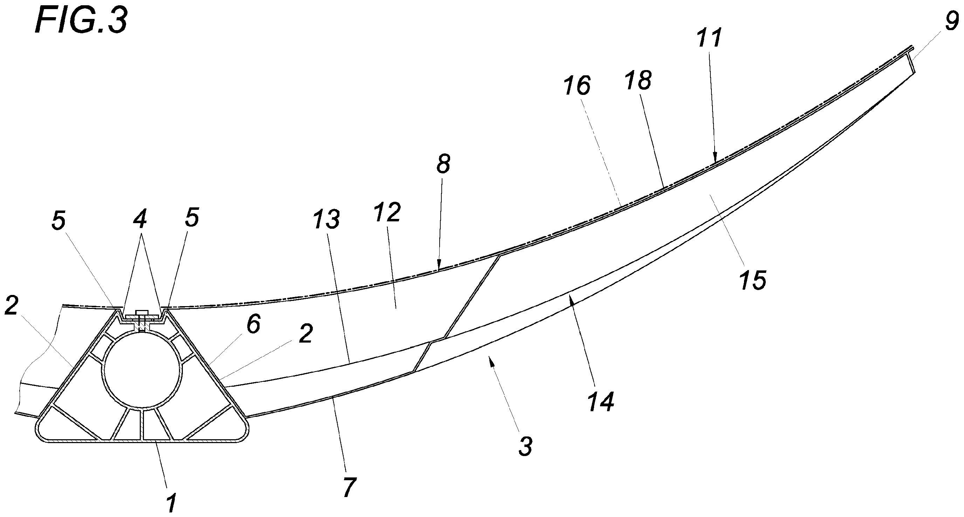

Die lediglich ausschnittsweise dargestellte Tragkonstruktion eines erfindungsgemäßen Sonnenkollektors in Form einer Parabolrinne weist einen Träger 1 mit zwei auf gegenüberliegenden Trägerseiten vorgesehenen Anschlussflächen 2 für Tragsegmente aus vorzugsweise faserverstärkten Kunststoffschalen 3 auf, die in Längsrichtung des Trägers 1 nebeneinandergereiht am Träger 1 befestigt sind. Die Ausrichtung der Tragsegmente gegenüber dem Träger 1 wird durch an den Kunststoffschalen 3 vorgesehene Anschlagwinkel 4 erreicht, die einen Richtanschlag 5 am Träger 1 formschlüssig umgreifen und die Kunststoffschalen 3 unter Anlage einer anschlussseitigen Stirnwand 6 der Kunststoffschale 3 an der zugehörigen Anschlussfläche 2 ausgerichtet halten. Der eine Schenkel des Anschlagwinkels 4 wird dabei vorteilhaft durch einen Randabschnitt der Stirnwand 6 gebildet. Zur Sicherung der Anschlaglage können die Anschlagwinkel 4 entlang des von der Stirnwand 6 abstehenden Schenkels mit einem Randsteg versehen sein, der gegenüber dem Träger 1 z. B. mittels Klemmschrauben festgeklemmt wird, wie dies in den Fig. 2 und 3 dargestellt ist.

Die Kunststoffschalen 3 bilden eine von der anschlussseitigen Stirnwand 6 ausgehende, vom Schalenboden 7 ausgewölbte Mittelrippe 8, die mit Abstand vor der gegenüberliegenden, auslaufseitigen Stirnwand 9 endet. Zwischen der Mittelrippe 8 und den seitlichen Schalenwänden 10 sind Seitenrippen 11 vorgesehen, und zwar gemäß dem Ausführungsbeispiel je zwei, die von der auslaufseitigen Stirnwand 9 der Kunststoffschale 3 ausgehen, aus dem Schalenboden 7 ausgewölbt sind und mit Abstand vor der anschlussseitigen Stirnwand 6 enden. Die Anordnung ist dabei so getroffen, dass sich die Mittelrippe 8 einerseits und die Seitenrippen 11 anderseits überlappen.

Die seitlichen Schalenwände 10 sowie die vom Schalenboden 7 ausgewölbten Wände 12 der Mittelrippe 8 sind mit abgesetzten Schultern 13 versehen, die einen abgesetzten Bodenabschnitt 14 bilden, der eine gegen die auslaufseitige Stirnwand 9 kontinuierlich abnehmende Absatzhöhe aufweist, wie dies insbesondere den Fig. 2 und 3 zu entnehmen ist. Da die Seitenrippen 11 von diesem abgesetzten Bodenabschnitt 14 ausgehen, kann für eine ausreichende Höhe der Seitenrippen 11 auch im Bereich der auslaufseitigen Stirnwand 9 gesorgt werden, um ein entsprechendes Widerstandsmoment für die geforderte Formstabilität der Kunststoffschalen 3 sicherstellen zu können.

Diesem Zweck dient auch die Maßnahme, die Wände 12 der Mittelrippe 8 und die Wände 15 der Seitenrippen 11 ausgehend von den zugehörigen Stirnseiten der Kunststoffschale 3 konvergieren zu lassen, womit die Quersteifigkeit verbessert werden kann. Durch die sich gegen ihr Ende hin verjüngenden Rippen 8 und 11 können die Rippen außerdem vorteilhaft platzsparend angeordnet werden. Die seitlichen Schalenwände 10 können für eine ähnliche Wirkung wie die Wände 12 und 15 der Rippen 8, 11 konvergieren. Dies gibt einfache Konstruktionsverhältnisse, wenn die Schalenwände ausgehend von der auslaufseitigen Stirnwand 9 konvergierend verlaufen.

Um durch die auf dem Träger 1 nebeneinandergereihten Kunststoffschalen 3 eine Parabolrinne für die aufzubringenden, in den Fig. 2 und 3 lediglich strichpunktiert angedeuteten Spiegelsegmente 16 vorgeben zu können, weisen die Kunststoffschalen 3 entsprechende Auflageflächen auf, die einerseits durch seitliche Randflansche 17 an den Schalenwänden 10 und anderseits durch Spiegelstützflächen 18 der Mittelrippe 8 und der Seitenrippen 11 gebildet werden und dem Verlauf der Parabolrinne folgen, sodass die an die Randflansche 17 und die Spiegelstützflächen 18 angedrückt gehaltenen Spiegelsegmente 16 entlang einer dem Querschnitt der Parabolrinne entsprechenden Parabel verlaufen.

Werden die Spiegelsegmente 16 mit den Kunststoffschalen 3 verklebt, so sollte eine stirnseitige Verklebung im Bereich der Anschlussseite entfallen, um einen Druckausgleich zwischen der Umgebung und dem Schalenhohlraum sicherzustellen.

## Patentansprüche

1. Sonnenkollektor mit einem Träger (1), mit nebeneinandergereihten, an beidseits des Trägers (1) vorgesehenen Anschlussflächen (2) befestigten Tragsegmenten aus offenen Kunststoffschalen (3), die eine Parabolrinne vorgebende seitliche Randflansche (17) zur Aufnahme von Spiegelsegmenten (16) sowie eine von der anschlussseitigen Stirnseite ausgehende, vom Schalenboden (7) ausgewölbte Mittelrippe (8) aufweisen, die eine der Parabolrinne folgende Spiegelstützfläche (18) bildet, **dadurch gekennzeichnet, dass** die Mittelrippe (8) vor der der anschlussseitigen Stirnseite gegenüberliegenden, auslaufseitigen Stirnseite endet, dass zwischen der Mittelrippe (8) und den seitlichen Schalenwänden (10) wenigstens je eine von einer durchgehenden Stirnwand (9) der auslaufseitigen Stirnseite ausgehende und vor der anschlussseitigen Stirnseite endende, eine der Parabolrinne folgende Spiegelstützfläche (18) bildende Seitenrippe (11) aus dem Schalenboden (7) ausgewölbt ist und dass die vom Schalenboden (7) aufragenden seitlichen Schalenwände (10) sowie die Wände (12) der Mittelrippe (8) abgesetzte Schultern (13) bilden.

2. Sonnenkollektor nach Anspruch 1, **dadurch gekennzeichnet, dass** sich die Mittelrippe (8) ausgehend von der anschlussseitigen Stirnseite der Kunststoffschale (3) und die Seitenrippen (11) ausgehend von der auslaufseitigen Stirnwand (9) verjüngen.

3. Sonnenkollektor nach Anspruch 1 oder 2, **dadurch gekennzeichnet, dass** die abgesetzten Schultern (13) der seitlichen Schalenwände (10) sowie der Wände (12) der Mittelrippe (8) einen abgesetzten Bodenabschnitt (14) mit einer gegen die auslaufseitige Stirnwand (9) kontinuierlich abnehmenden Absatzhöhe bilden und dass die Seitenrippen (11) von dem abgesetzten Bodenabschnitt (14) aufragen.

4. Sonnenkollektor nach einem der Ansprüche 1 bis 3, **dadurch gekennzeichnet, dass** zwischen der Mittelrippe (8) und den seitlichen Schalenwänden (10) je zwei Seitenrippen (11) vorgesehen sind.

5. Sonnenkollektor nach einem der Ansprüche 1 bis 4, **dadurch gekennzeichnet, dass** die Kunststoffschalen (3) der Tragsegmente auf der anschlussseitigen Stirnseite einen einen Richtanschlag (5) des Trägers (1) formschlüssig übergreifenden Anschlagwinkel (4) aufweisen.

## Claims

1. Solar collector having a support (1), having support segments which are arranged next to one another and made of open plastic shells (3), and are fastened on connection surfaces (2) provided on both sides of the support (1), which plastic shells (3) have lateral edge flanges (17) predefining a parabolic trough for accommodating mirror segments (16) as well as a central rib (8) which originates from the connection-side end face, bulges out from the shell base (7), and forms a mirror support surface (18) following the parabolic trough, **characterized in that** the central rib (8) ends in front of the outlet-side end face opposite the connection-side end face, **in that** between the central rib (8) and the side shell walls (10) there is in each case at least one side rib (11) bulged out from the shell base (7), said side rib (11) originating from a continuous end wall (9) of the outlet-side end face and ending in front of the connection-side end face and forming a mirror support surface (18) following the parabolic trough, and **in that** the side shell walls (10) projecting from the shell base (7) and the walls (12) of the central rib (8) form offset shoulders (13).

2. Solar collector according to claim 1, **characterized in that** the central rib (8) tapers starting from the connection-side end face of the plastic shell (3) and the side ribs (11) taper starting from the outlet-side end wall (9).

3. Solar collector according to claim 1 or 2, **characterized in that** the offset shoulders (13) of the side shell walls (10) as well as of the walls (12) of the central rib (8) form an offset bottom section (14) with a step height continuously decreasing towards the outlet side end wall (9), and **in that** the side ribs (11) project from the offset bottom section (14).

4. Solar collector according to one of claims 1 to 3, **characterized in that** between the central rib (8) and the side shell walls (10) two side ribs (11) each are provided.

5. Solar collector according to one of claims 1 to 4, **characterized in that** the plastic shells (3) of the support segments have, on the connection-side end face, a stop bracket (4) which positively engages over an alignment stop (5) of the support (1).

## Revendications

1. Collecteur solaire comprenant un support (1) possédant des segments porteurs, faits de coques en plastique ouvertes (3), disposés en rangées les uns à côté des autres et fixés à des surfaces de raccordement (2) prévues de part et d'autre du support (1), dans lequel les segments porteurs présentent des brides de bord latérales (17) qui forment une gouttière parabolique destinées à recevoir des segments de miroir (16) ainsi qu'une nervure centrale (8) bombée à partir du fond (7) de la coque en partant de la face frontale côté raccordement et qui forme une surface d'appui de miroir (18) qui suit la gouttière parabolique, **caractérisé en ce que** la nervure centrale (8) se termine avant la face frontale côté sortie, opposée à la face frontale côté raccordement, **en ce que**, entre la nervure centrale (8) et les parois latérales (10) de la coque, au moins une nervure latérale (11) est bombée à partir du fond (7) de la coque, partant respectivement d'une paroi frontale continue (9) de la face frontale côté sortie, se terminant avant la face frontale côté raccordement, formant une surface d'appui de miroir (18) qui suit la gouttière parabolique, et **en ce que** les parois latérales (10) de la coque, saillantes à partir du fond (7) de la coque, ainsi que les parois (12) de la nervure centrale (8) forment des épaulements décalés (13).

2. Collecteur solaire selon la revendication 1, **caractérisé en ce que** la nervure centrale (8) s'amincit à partir de la face frontale côté raccordement de la coque en plastique (3) et les nervures latérales (11) s'amincissent à partir de la paroi frontale côté sortie (9).

3. Collecteur solaire selon la revendication 1 ou 2, **caractérisé en ce que** les épaulements décalés (13) des parois latérales (10) de la coque ainsi que des parois (12) de la nervure centrale (8) forment une partie de fond décalée (14) avec une hauteur de marche qui diminue de façon continue en direction de la paroi frontale côté sortie (9), et **en ce que** les nervures latérales (11) saillent à partir de la partie de fond décalée (14).

4. Collecteur solaire selon l'une quelconque des revendications 1 à 3, **caractérisé en ce que** deux nervures latérales (11) sont prévues entre la nervure centrale (8) et chacune des parois latérales (10) de la coque.

5. Collecteur solaire selon l'une quelconque des revendications 1 à 4, **caractérisé en ce que** les coques en plastique (3) des segments porteurs présentent, sur la face frontale côté raccordement, un angle de butée (4) qui recouvre par complémentarité de forme une butée d'alignement (5) du support (1).
